# EUROPÄISCHE PATENTSCHRIFT

(11) **EP 1 606 853 B1**
(45) Veröffentlichungstag und Bekanntmachung des Hinweises auf die Patenterteilung: **23.08.2006**
(21) Anmeldenummer: 03788788.2
(22) Anmeldetag: 11.11.2003
(51) Int. Cl.: H01Q 1/24, H01Q 1/32, H04B 1/38

(54) **ANTENNENKOPPLER UND HALTERUNG FÜR MOBILFUNKENDGERÄTE**
ANTENNA COUPLER AND MOUNT FOR MOBILE RADIO TERMINALS
COUPLEUR D'ANTENNE ET SUPPORT POUR TERMINAUX RADIOTELEPHONIQUES MOBILES

(30) Priorität: 25.03.2003 DE 10313498
(43) Veröffentlichungstag der Anmeldung: 21.12.2005
(73) Patentinhaber: Audioton Kabelwerk GmbH Zweigniederlassung Scheinfeld, 91443 Scheinfeld (DE)
(72) Erfinder: STRAUSS, Karsten, 74564 Crailsheim (DE); SCHLEGEL, Thomas, 90453 Nürnberg (DE)
(74) Vertreter: Lelgemann, Karl-Heinz
(86) Internationale Anmeldenummer: PCT/DE2003/003766
(87) Internationale Veröffentlichungsnummer: WO 2004/086558

(56) Entgegenhaltungen:
- EP-A- 0 766 339
- EP-A- 0 999 607
- DE-A- 19 915 246
- US-A- 5 668 561
- US-A- 6 134 421
- US-A1- 2001 001 343

## Beschreibung

Die Erfindung betrifft eine Halterung mit einen Antennenkoppler für Mobilfunkendgeräte, der mit einer Schnittstelle zum Anschluß einer externen Antenne, insbesondere einer Kraftfahrzeug-Antenne, und einer Koppelstruktur zur elektromagnetischen Kopplung von HF-Signalen zwischen dem Antennenkoppler und der Antenne eines sich in der Nähe des Antennenkopplers befindlichen Mobilfunkendgerätes versehen ist. Die Erfindung betrifft weiter eine Halterung für ein Mobilfunkendgerät, die mit einer Schnittstelle zum Anschluß einer externen Antenne, insbesondere einer Kraftfahrzeug-Antenne, und mit einer Koppelstruktur zur elektromagnetischen Kopplung von HF-Signalen zwischen der Halterung und der Antenne eines sich in der Halterung befindlichen Mobilfunkendgeräts versehen ist und bei der die Koppelstruktur derart in der Halterung angeordnet ist, daß bei eingelegtem Mobilfunkendgerät die Koppelstruktur in der Nähe des Mobilfunkendgeräts positioniert ist.

Mobilfunkendgeräte sind heutzutage in vielerlei Variationen und Ausführungsformen erhältlich. Einige dieser Mobilfunkendgeräte sind nicht mit einer Antennenbuchse zum Anschluß einer externen Antenne ausgestattet.

Um diese Mobilfunkendgeräte trotzdem mit einer externen Antenne betreiben zu können, sind Antennenkoppler bekannt, die eine elektromagnetische Kopplung von HF-Signalen zwischen dem Antennenkoppler und der Antenne des Mobilfunkendgeräts ermöglichen.

So wird in DE 10 037 241 A1 eine Handy-Halterung zum Einbau in eine Fahrgastzelle eines Kraftfahrzeuges beschrieben, die mit einer Koppelantenne ausgestattet ist. Diese Koppelantenne ermöglicht bei eingelegtem Mobilfunkendgerät eine kapazitive Kopplung des HF-Signals zwischen der Antenne des Mobilfunkendgeräts und der Handy-Halterung. Eine Verbindungsleitung verbindet die Koppelantenne mit einer externen Antenne. Die Handy-Halterung weist ein Befestigungselement, beispielsweise einen Magneten, auf, der das Mobilfunkendgerät in der Handy-Halterung hält.

Die Koppelantenne besteht hierbei aus einer Dipolstruktur der elektrischen Länge von λ/4, die aus Metall oder einem elektrisch gut leitenden Kunststoff besteht und gewinkelt ausgebildet ist. Die Koppelantenne läuft hierbei zumindest teilweise in einem Halterungselement an der Oberseite der Handy-Halterung, so daß nicht nur die seitlich von der Mobilfunkantenne abgestrahlten HF-Signale eingekoppelt werden, sondern auch die nach oben abgestrahlten HF-Signale. Hierdurch wir die Übertragungsqualität der HF-Signale verbessert.

DE 19 953 648 A1 beschreibt einen modularen Dualband-Planarkoppler für die Ankopplung einer externen Antenne an ein Mobilfunkendgerät. Dieser Antennenkoppler besteht aus einer leitfähigen Platte oder Folie mit einer schlitzförmigen leitfähigen Struktur, die aus einem oder mehreren leitfähigen schlitzförmigen Wellenleitersegmenten bestehen, wobei der Innenleiter und der Außenleiter eines koaxialen Wellenleiters jeweils galvanisch an den gegenüberliegenden Kanten des Schlitzleiters mit der leitfähigen Platte oder Folie verbunden sind. Die Achse des Innenleiters wird hierbei orthogonal zur Flächennormale der leitfähigen Platte oder Folie sowie zur Achse des Schlitzleiters geführt. Die strukturierte leitfähige Platte oder Folie wird galvanisch berührungsfrei und flächenparallel zum systemintegrierten Objektstrahlers sowie über der Strahlerapparatur des Objektstrahlers angeordnet.

US-A-6 134 421 beschreibt ebenfalls einen Antennenkoppler für die Ankopplung einer externen Antenne an ein Mobilfunkendgerät, ebenso US-A-5 668 561.

Weiter sind Antennenkoppler in Form von Spulen oder Metallösen bekannt, die an der Antenne eines Mobiltelefons angebracht werden.

Der Erfindung liegt nun die Aufgabe zugrunde, ein nicht mit einer Antennenbuchse ausgestattetes Mobilfunkendgerät mit einer externen Antenne zu verbinden und hierbei die Koppeldämpfung möglichst gering zu halten.

Diese Aufgabe wird von einer Halterung gemäß Anspruch 1 gelöst.

Durch die Erfindung wird eine besonders verlustarme elektromagnetische Kopplung zwischen typischen internen Antennen von Mobilfunkendgeräten, die über eine ausgeprägte Richtcharakteristik verfügen und meist in zwei oder mehr unterschiedlichen Frequenzbändern betrieben werden (Dualband, Three-Band), und externen Antennen erreicht. Untersuchungen haben gezeigt, daß durch derartig räumlich hintereinander angeordnete Teil-Koppelstrukturen Koppelverluste auch bei planarer Ausgestaltung der einzelnen Teil-Koppelstrukturen stark reduziert werden können. Der Erfindung liegt hierbei die Erkenntnis zugrunde, daß unter den speziellen Bedingungen dieses Anwendungsgebiets (Antenne und Koppler sehr nah zueinander angeordnet, starke Richtcharakteristik der Mobilfunkantenne, Betrieb in zwei oder mehr Frequenzbänder, verwendeter Frequenzbereiche) eine räumliche Anordnung mehrerer hintereinander angeordneter Koppelstrukturen die elektromagnetische Kopplung verbessert und hierdurch die Koppeldämpfung verringert werden kann. Es hat sich gezeigt, daß durch eine derartige räumliche Anordnung zweier oder mehrere Teil-Koppelstrukturen im Vergleich zu planaren Antennen-Koppelstrukturen größere Feldanteile in die Koppelstruktur eingekoppelt werden können, auch wenn sich die Beabstandung der Koppelstrukturen in einem Bereich befindet, in dem durch die Beabstandung noch keine impedanztransformierenden Eigenschaften erielt werden.

Bei Einsatz innerhalb von Fahrzeugen ergeben sich hierdurch insbesondere folgende Vorteile:

Die Feldstärke innerhalb des Fahrzeuges wird verringert. Durch die abschirmende Wirkung der Fahrzeugkarosserie wäre ein Mobilfunkendgerät ohne Einsatz der Erfindung gezwungen, mit einer höheren Leistung zu senden. So wird vermieden, daß es durch Resonanzeffekte zu deutlich höheren Feldstärken kommt als im Freifeld (also außerhalb des Fahrzeuges). Weiter wirkt sich das durch das Mobilfunkendgerät erzeugte elektrische Feld auch auf die im Fahrzeug befindliche Elektronik aus und kann zu Störungen dieser Elektronik führen. Weiter wird eine Verringerung der Zellgröße der Funk-Zellen vermieden. Durch die Effekte der Karosserie wird das Strahlungsfeld eines Mobilfunkendgeräts weiter üblicherweise stark zerfranst. Damit verringert die Erfindung die Wahrscheinlichkeit des Auftretens eines Empfangslochs mit der Folge reduzierter Sprachqualität bis hin zu Verbindungsabbruch oder Nichterreichbarkeit.

Als besonders vorteilhaft hat es sich erwiesen, die zwei oder mehr Teil-Koppelstrukturen in wesentlich parallel zueinander liegenden Ebenen und voneinander beabstandet anzuordnen. Die Teil-Koppelstrukturen werden hierbei vorzugsweise drei bis sechs Millimeter voneinander beabstandet übereinander angeordnet. Eine derartige Anordnung ist zum einen auf die Abstrahl-Charakteristik von Mobilfunkendgeräten und den von Mobilfunkendgeräten verwendeten Frequenzbändern besonders gut angepaßt und zum anderen fertigungstechnisch einfach und kostengünstig zu implementieren.

Weitere Vorteile ergeben sich hierbei, wenn die zwei oder mehr Teil-Koppelstrukturen im Wesentlichen senkrecht zur Hauptabstrahlrichtung des Mobilfunkendgerätes orientiert hintereinander angeordnet sind. Hierdurch läßt sich der Anteil der einkoppelbaren Feldanteile vergrößern.

Weiter läßt sich der Anteil der einkoppelbaren Feldanteile dadurch erhöhen, daß die Teil-Koppelstrukturen im Rahmen des in der Halterung zur Verfügung stehenden Platzes möglichst weit voneinander beabstandet angeordnet sind. Eine erste Teil-Koppelstruktur ist so beispielsweise in unmittelbare Nähe der Oberseite der Halterung und eine zweite Teil-Koppelstruktur in unmittelbarer Nähe der Unterseite der Halterung angeordnet.

Weiter ist es vorteilhaft, die Teil-Koppelstrukturen in Bruchteilen der Wellenlänge, insbesondere λ/4 und größer, zu beabstanden und damit zusätzlich entstehende impedanztransformierende Eigenschaften der Koppelstruktur auszunutzen. Um die Anpassung an zwei oder mehr von dem Mobilfunkendgerät verwendeten Frequenzbändern zu verbessern, ist es hierbei vorteilhaft, drei, vier oder mehr Teil-Koppestrukturen zu verwenden, die jeweils zueinander entsprechend beabstandet sind.

Eine besonders geringe Koppeldämpfung in zwei oder mehr unterschiedlichen Frequenzbereichen ist dadurch erzielbar, daß eine Teil-Koppelstruktur aus zwei oder mehr für unterschiedliche Wellenlängenbereich bestimmte, unterschiedlich ausgeformte Teil-Strukturen besteht. Bei der Verwendung zweier solcher Teil-Strukturen hat es sich hierbei als Vorteilhaft erwiesen, eine Teil-Koppelstruktur aus zwei Teil-Strukturen auszuformen, deren Orientierungsrichtungen um 90° verdreht sind. Nach einem weiteren bevorzugten Ausführungsbeispiel der Erfindung ist es auch möglich, verschiedene Teil-Koppelstrukturen auf verschiedene Wellenlängenbereiche zu optimieren.

Es ist zweckmäßig, eine Teil-Koppelstruktur aus einem leitfähigen Material herzustellen, das auf einer Seite eines Trägersubstrats, insbesondere einer Platine, aufgebracht ist. Weiter ist es möglich, auf dem Trägermaterial zwei oder mehr Teil-Strukturen aus einem leitfähigen Material aufzubringen und ein oder mehrere dieser Teilstrukturen bei der Abstimmung des Antennenkopplers auf ein bestimmtes Mobilfunkendgerät mittels Kondensatoren oder Spulen miteinander zu verbinden. Durch ein derartiges Vorgehen ergeben sich produktionstechnische Vorteile: Das Trägersubstrat mit den zwei oder mehr Teil-Strukturen kann in größeren Stückzahlen für verschiedene Mobilfunkendgerät-Typen produziert werden, da die jeweils für einen bestimmten Mobilfunkendgerät-Typ verwendete Teil-Koppelstruktur individuell auf die besondere Abstrahlcharakteristik dieses Mobilfunkendgerät-Typs abgestimmt werden kann. Dadurch wird eine Lösung bereit gestellt, die geringe Produktionskosten mit geringer Koppeldämpfung verbindet.

Gemäß eines bevorzugten Ausführungsbeispiels der Erfindung bestehen die zwei oder mehr Teil-Koppelstrukturen aus einem leitfähigen Material, das auf einem jeweiligen zugeordneten dünnen dielektrischen Trägersubstrat-Körper aufgebracht ist, wobei die dielektrischen Trägersubstrat-Körper voneinander beabstandet übereinander angeordnet sind. So kann die Koppelstruktur beispielsweise aus zwei oder mehr übereinander angeordneten Platinen bestehen, auf denen jeweils leitfähige Flächen Teil-Koppelstrukturen realisieren. Hierdurch ergibt sich ein produktionstechnisch einfach herzustellender Antennenkoppler, der eine geringe Koppeldämpfung besitzt. Weitere Vorteile lassen sich dadurch erielen, dass der Antennenkoppler ein oder mehrere elektrische Verbindungselemente aufweist, die zwischen Trägersubstrat-Körpern angeordnet sind. Mittels dieser elektrischen Verbindungselemente werden Teil-Koppelstrukturen oder Teil-Strukturen von Teil-Koppelstrukturen miteinander verkoppelt.

Die elektrischen Verbindungselemente weisen vorzugsweise jeweils ein oder mehrere gefedert gelagerte elektrisch leitfähige Kontaktelemente auf, die auf entsprechend ausgeformte Kontaktflächen eingreifen. Hierdurch vereinfacht sich zum einen die Montage, zum anderen erhöht sich so die Betriebssicherheit und Langlebigkeit des Antennenkopplers. Insbesondere im Automobilbereich ergeben sich hier Vorteile, da bei Montage der Halterung in einem Kraftfahrzeug Vibrationen und hohe Temperaturschwankungen auf den Antennenkoppler einwirken.

Weiter hat es sich als vorteilhaft erwiesen, daß auf einem ersten Trägersubstrat ein HF-Kopplungselement zur Kopplung zweier oder mehrerer Teil-Strukturen einer Teil-Koppelstruktur angeordnet ist, die auf einem zweiten Trägersubstrat-Körper aufgebracht sind. Hierdurch läßt sich der Wellenwiderstand des Antennenkopplers genauer anpassen.

Weiter ist es zweckmäßig, den Trägersubstrat-Körper aus einem flexiblen Material herzustellen. Es hat sich als vorteilhaft erwiesen, daß die oberste, dem Mobilfunkendgerät am nächsten liegende Teil-Koppelstruktur möglichst nahe der Antenne des Mobilfunkendgerätes angeordnet ist. Wird der Trägersubstrat-Körper dieser Teil-Koppeistruktur aus einem flexiblen Material hergestellt, so kann sich der Trägersubstrat-Körper an die Form des Mobilfunkendgeräts anschmiegen, so daß der Abstand zwischen der Antenne des Mobilfunkendgerätes und dieser Teil-Koppelstruktur sehr gering ist.

Diese Vorteile lassen sich auch weiter dadurch erreichen, daß die oberste Teil-Koppelstruktur mit dem Gehäuse der Halterung verbunden, insbesondere verklebt, ist. Die oberste Teil-Koppelstruktur kann hierbei auf der Außenseite des Gehäuses der Halterung oder auf der Innenseite des Gehäuses der Halterung angeordnet werden. Die Anordnung auf der Innenseite des Gehäuses hat hierbei den Vorteil, daß sich die Ausfallsicherheit und die Langlebigkeit des Antennenkopplers erhöhen. Vorteilhaft ist hierbei, die oberste Teil-Koppelstruktur auf der Innenseite des Gehäuses der Halterung in unmittelbarer Nähe der Antenne des Mobilfunkendgeräts anzuordnen.

Weitere Vorteile ergeben sich dadurch, daß der Trägersubstrat-Körper ein oder mehrere Innenfräsungen aufweist, die zwischen den Leiterflächen der Teil-Koppelstruktur angeordnet sind. Durch diese Entfernung von Dielektrizitäts-Material verbessert sich die Abstimmbarkeit des Antennenkopplers.

Im folgenden wird die Erfindung anhand von mehreren Ausführungsbeispielen unter Zuhilfenahme der beiliegenden Zeichnungen beispielhaft erläutert.
- Fig. 1: zeigt eine schematische Darstellung einer erfindungsgemäßen Halterung für ein Mobilfunkendgerät mit einem erfindungsgemäßen Antennenkoppler.
- Fig. 2: zeigt eine Draufsicht auf eine Teil-Koppelstruktur für den Antennenkoppler nach Fig. 1.
- Fig. 3: zeigt eine Draufsicht auf eine Teil-Koppelstruktur für einen Antennenkoppler nach Fig. 1
- Fig. 4: zeigt eine Draufsicht einer Teil-Koppelstruktur für einen Antennenkoppler nach Fig. 1.
- Fig. 5: zeigt eine schematische Darstellung einer erfindungsgemäßen Halterung für ein Mobilfunkendgerät gemäß eines weiteren Ausführungsbeispiels der Erfindung.
- Fig. 6: zeigt eine schematische Darstellung einer erfindungsgemäßen Halterung für ein Mobilfunkendgerät gemäß eines weiteren Ausführungsbeispiels der Erfindung.

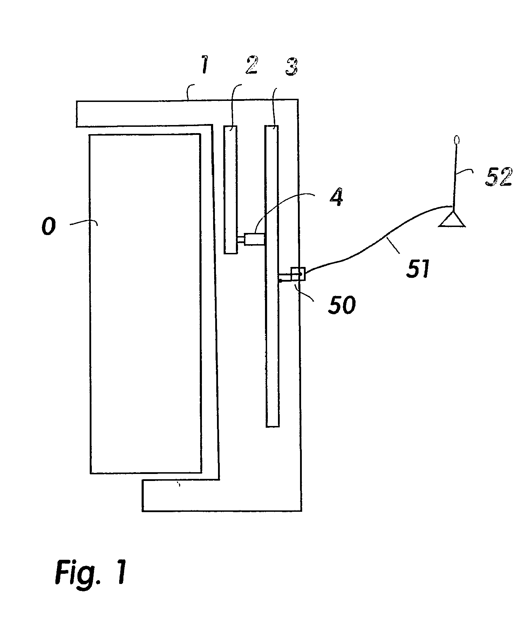

Fig. 1 zeigt eine Halterung 1, ein aus zwei Teil-Koppelstrukturen 2 und 3 und einem elektrischen Verbindungselement 4 gebildeten Antennenkoppler, eine Schnittstelleneinheit 50, ein Verbindungskabel 51, eine externe Antenne 52 und ein Mobilfunkendgerät 0.

Bei dem Mobilfunkendgerät 0 kann es sich um Mobilfunkendgeräte unterschiedlicher Hersteller handeln, die auch nach unterschiedlichen Mobilfunkstandards arbeiten können. Beispielsweise kann es sich um GSM-Endgeräte (GSM = Global System for Mobile Communication oder um UMTS-Endgeräte (UMTS = Universal Mobil Telecommunications System) handeln. Bei dem Mobilfunkendgerät 0 handelt es sich hierbei vorzugsweise um ein Mobilfunkendgerät, das über zwei oder mehr Frequenzbänder kommunizieren kann.

Die Halterung 1 ist so ausgebildet, daß sie ein wie oben beschriebenes Mobilfunkendgerät mechanisch aufnehmen kann. Neben der rein mechanischen Aufnahme ist es vorteilhaft, daß die Halterung 1 eine Halterungsvorrichtung aufweist, die das Mobilfunkendgerät innerhalb der Halterung fixiert. Bei dieser Halterungsvorrichtung kann es sich beispielsweise um einen Magneten, einen Haltebügel oder ein Element handeln, welches eine mechanische Klemmwirkung erzeugt.

Weiter ist es vorteilhaft, daß die Halterung 1 ein Anschlußelement aufweist, das in eine Schnittstelle des Mobilfunkendgerätes 0 eingreift, wenn das Mobilfunkendgerät 0 in die Halterung 1 bis zur Endstellung eingeführt ist. Bei dieser Schnittstelle kann es sich beispielsweise um eine Steuerschnittstelle und/oder um eine Schnittstelle zur externen Stromversorgung handeln.

Die Halterung 1 ist weiter so ausgestaltet, daß sie zum Einbau in Kraftfahrzeugen geeignet ist. Sie kann hierzu beispielsweise über entsprechende Aussparungen verfügen, mittels denen sie über Befestigungsmittel mit dem Kraftfahrzeug verbindbar ist. Weiter ist es auch möglich, daß die Halterung 1 zweiteilig ausgestaltet ist. Sie kann zum einen über eine an das spezielle Mobilfunkendgerät mechanisch und/oder elektrisch angepaßte Haltevorrichtung verfügen, in der auch der Antennenkoppler integriert ist. Sie kann zum anderen über ein Grundteil verfügt, das mechanisch mit dem Kraftfahrzeug verbindbar ist. Zwischen der Haltevorrichtung und dem Grundteil kann hierbei eine einheitliche mechanische und/oder elektrische Verbindung vorgesehen sein, so daß unterschiedliche Haltevorrichtungen für unterschiedliche Mobilfunkendgerät-Typen mit ein und demselben Grundteil mechanisch und/oder elektrisch verbindbar sind.

Natürlich ist es auch möglich, daß die Halterung 1 auch für andere Einsatzgebiete verwendbar ist.

Der Antennenkoppler ist über Verbindungsleitungen mit der Schnittstelleneinrichtung 50 verbunden. Bei der Schnittstelleneinrichtung 50 handelt es sich beispielsweise um eine Anschlußbuchse zum Anschluß eines Koaxialkabels. Es kann sich bei der Schnittstelleneinrichtung 50 aber auch um eine einfache galvanische Verbindung handeln. Das Anschlußkabel 51 verbindet die Schnittstelleneinrichtung 50 mit der externen Antenne 52. Bei der externen Antenne 52 handelt es sich beispielsweise um die Außenantenne eines Kraftfahrzeuges. Es kann sich bei der externen Antenne 52 aber auch um eine innerhalb des Kraftfahrzeugs angeordnete Antenne handeln, die beispielsweise im Bereich der Fensterfläche angebracht ist.

Es ist auch möglich, auf die Schnittstelleneinrichtung 50 zu verzichten und das Verbindungskabel 51 direkt mit dem Antennenkoppler 1 zu verbinden, beispielsweise auf die Teil-Koppelstruktur 3 aufzulöten.

Neben dem Antennenkoppler kann die Halterung 1 noch weitere Baugruppen enthalten, die beispielsweise Funktionen einer Freisprecheinrichtung, eines Navigations-Sytems, usw. erbringen. Die Halterung 1 kann hierzu auch über Ein- und Ausgabemittel, beispielsweise Mikrophone, Lautsprecher, Displays, usw. verfügen.

Die Teil-Koppelstrukturen 2 und 3 bestehen jeweils aus einem leitfähigen Material, das auf einer Seite eines dünnen Trägersubstrats, insbesondere einer Platine, aufgebracht ist. Auf das Trägersubstrat kann hierbei auch verzichtet werden, wenn die Teil-Koppelstruktur aus einem leitfähigen Material einer Dicke ausgeführt wird, die über genügend mechanische Stabilität verfügt.

Die zwei Teil-Koppelstrukturen 2 und 3 sind in wesentlich parallel zueinander liegenden Ebenen und etwa 3,5 mm voneinander beabstandet angeordnet. Der Abstand zwischen den Teil-Koppelstrukturen 2 und 3 kann hierbei abhängig von dem verwendeten Mobilfunkendgerät und den Dielektrizitäts-Konstanten der verwendeten Trägermaterialien sowie des Abstandes zwischen der Teil-Koppelstruktur 2 und der Antenne des Mobilfunkendgerätes 0 variiert werden. Untersuchungen haben gezeigt, daß die Teil-Koppelstrukturen 2 und 3 vorzugsweise mehr als 3 mm voneinander beabstandet anzuordnen sind.

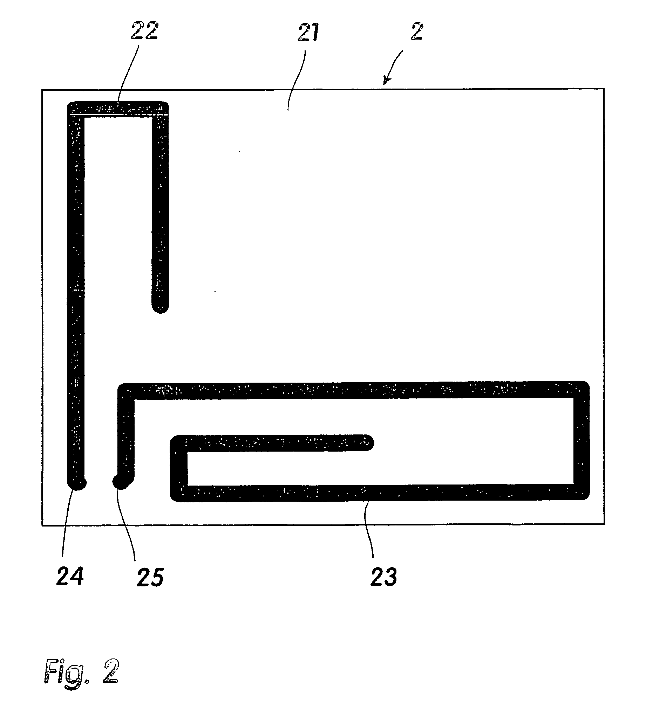

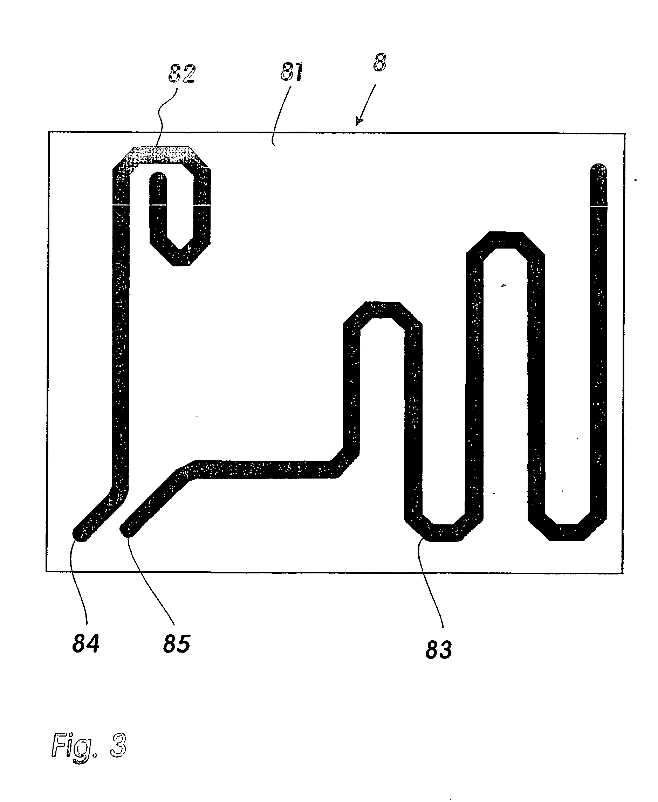

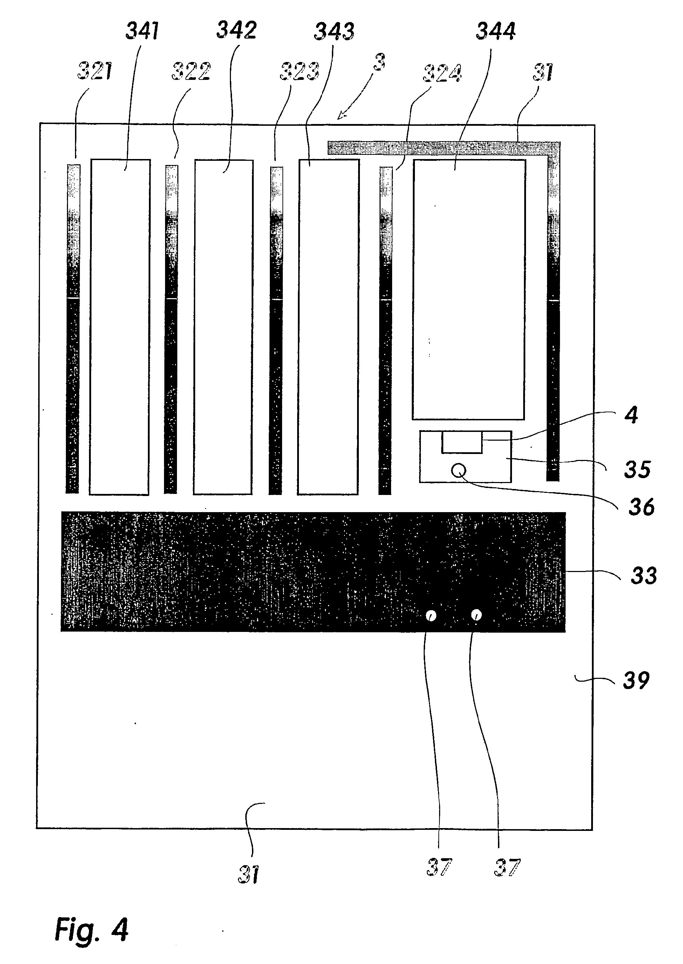

Zwei bevorzugte Ausführungsformen der Teil-Koppelstruktur 2 sind in den Fig. 2 und Fig. 3 gezeigt. Eine bevorzugte Ausführungsform der Teil-Koppelstruktur 3 ist in Fig. 4 gezeigt.

Weiter ist es auch möglich, daß die Teil-Koppelstrukturen 2 und 3 nicht in parallel zueinander liegenden Ebenen angeordnet sind, sondern beispielsweise konkav oder winkelig geformt sind, um die Teil-Koppelstrukturen besser an die Abstrahl-Charakteristik des eingesetzten Mobilfunkendgerätes anzupassen. Weiter ist es hierzu auch möglich, den Abstand zwischen den Teil-Koppelstrukturen 2 und 3 bereichsweise unterschiedlich zu wählen.

Das elektrische Verbindungselement 4 stellt eine zwei- oder mehradrige elektrische Verbindung zwischen den Teil-Koppelstrukturen 2 und 3 her. Es wird vorzugsweise von einem Grundkörper aus einem nicht leitfähigen Material gebildet, in dem ein oder mehrere gefedert gelagerte elektrisch leitfähige Kontaktelemente geführt werden. Das Verbindungselement 4 ist beispielsweise einerseits mit Leiterbahnen der Teil-Koppetstruktur 3 verlötet und so fest mit der Teil-Koppelstruktur 3 verbunden. Die elektrisch leitfähigen Kontaktelemente des Verbindungselements 4 greifen andererseits auf entsprechend ausgeformte Kontaktflächen der Teil-Koppelstruktur 2 ein.

Es ist natürlich auch möglich, daß das elektrische Verbindungselement 4 durch ein Kabel oder durch ein oder mehrere Drahtstifte gebildet wird, die voneinander beabstandet einen galvanischen Kontakt zwischen leitfähigen Bereichen der Teil-Koppelstrukturen 2 und 3 herstellen.

Fig. 2 zeigt eine Ansicht einer Seite der Teil-Koppelstruktur 1. In diesem Ausführungsbeispiel wird die Teil-Koppelstruktur von einem dünnen, nicht leitfähigen Substrat und von auf diesem Substrat aufgebrachten Teil-Strukturen aus leitfähigem Material gebildet.

Die Teil-Koppelstruktur 2 weist so einen Dielektrizitäts-Körper 21 und zwei von dem leitfähigen Material gebildeten Teil-Strukturen 22 und 23 mit zwei Koppelpunkten 24 und 25 auf.

Bei dem Dielektrizitäts-Körper 21 handelt es sich vorzugsweise um eine Platine. Als Material für den Dielektrizitäts-Körper 21 wird FR4-Material verwendet, das eine Dielektrizitätskonstante von 4,5 bis 6, vorzugsweise von etwa 4,5 hat. Weiter ist es auch möglich, als Substrat einen Keramikträger oder RT-Duroit zu verwenden. Die Verwendung eines Keramikträgers bewirkt, daß die Größe der Koppelstruktur verringert werden kann. Die Dicke des Dielektrizitäts-Körpers 21 beträgt etwa 0,1 bis 0,5 mm. Hierbei ist es vorteilhaft, den Dielektrizitäts-Körper 21 noch dünner auszuformen.

Die Dicke der leitenden Schicht, aus der die Teil-Strukturen 22 und 23 gebildet sind, beträgt vorzugsweise 35 µm bis 70 µm, kann jedoch auch dicker oder dünner ausgebildet werden. Als leitfähiges Material wird ein Metall, beispielsweise Kupfer, verwendet. Es kann sich bei dem leitfähigen Material jedoch auch um einen leitfähigen Kunststoff handeln.

Die Teil-Strukturen 22 und 23 sind, wie in Fig. 2 gezeigt, unterschiedlich ausgeformt und für unterschiedliche Wellenlängenbereiche bestimmt. Die Teil-Struktur 22 ist für das 1800 MHz-Band bestimmt. Die Teil-Struktur 23 ist für das 900 MHz-Band bestimmt. Wie in Fig. 2 gezeigt, ist die Teil-Struktur 22 horizontal orientiert und die Teil-Struktur 23 vertikal orientiert.

Die Teil-Koppelstruktur 22 ist hierbei in der Form einer nicht ganz geschlossenen Schleife ausgeführt, deren Länge in etwa 14 mm beträgt und deren Breite in etwa 5 mm beträgt. Die Breite der Leiterbahn, aus der die Teil-Koppelstruktur 22 geformt wird, beträgt in etwa 1 mm.

Die Teil-Koppelstruktur 23 hat längs gestreckte Spiralform. Die Länge der so gebildeten Spirale beträgt in etwa 25 mm und die Breite in etwa 8 mm .

Eine alternative Ausformung der Teil-Koppelstrukturen 22 und 23 ist in Fig. 3 gezeigt.

Fig. 3 zeigt eine Teil-Koppelstruktur 8, die aus zwei Teil-Strukturen 82 und 83 aus einem dünnen leitfähigen Material und einem Dielektrizitäts-Körper 81 besteht.

Die Teil-Strukturen 82 und 83 sind unterschiedlich ausgeformt, wobei die Teil-Struktur 82 für das 1800 MHz-Band und die Teil-Struktur 83 für das 900 MHz-Band bestimmt ist. Auch die beiden Teil-Strukturen 82 und 83 sind unterschiedlich orientiert. So ist die Teil-Struktur 82 vertikal und die Teil-Koppelstruktur 83 horizontal orientiert. Die Teil-Struktur 82 hat eine Spiralform. Die Teil-Struktur 83 hat eine mäanderförmig Form.

Es ist auch möglich, daß die Teil-Strukturen 22, 23, 84 und 85 in ihren Abmessungen verändert werden, um sie an die von dem Mobilfunkendgerät verwendeten Frequenzbänder, an die Dielektrizitätskonstanten der verwendeten Dielektrizitäts-Körper und an ihre Beabstandung von der Antenne des Mobilfunkendgerätes anzupassen. Weiter ist es auch möglich, die Teil-Strukturen 22 und 82 oder 23 und 83 gegenseitig auszutauschen oder bereits innerhalb der jeweiligen Teil-Koppelstruktur miteinander zu verkoppeln.

Fig. 4 zeigt die Teil-Koppelstruktur 3, die von einem Dielektrizitäts-Körper 39 und mehreren aus einem dünnen elektrisch leitfähigen Material bestehenden Teil-Strukturen 321, 322, 323, 324, 31 und 33 gebildet wird. Die Teil-Strukturen 321, 322, 323, 324 und 31 sind mittels Kondensatoren mit der Teil-Struktur 33 verbindbar. Auf diese Weise ist eine Abstimmung des Antennenkopplers auf das jeweilige Mobilfunkendgerät möglich. Beispielsweise sind so die Teil-Strukturen 321 und 31 über Kondensatoren (in Fig. 4 nicht gezeigt) mit der Teil-Struktur 33 verbunden. Zwischen den Teil-Strukturen 321 bis 324, 31 und 33 sind Fräsungen 341, 342, 343 und 344 vorgesehen. Derartige Innenfräsungen könnten auch auf den Dielektrizitäts-Körpern 21 und 81 ausgeformt sein.

Weiter weist der Dielektrizitäts-Körper 31 einen Combiner 35 auf, der mit dem elektrischen Verbindungselement 4 verbunden ist. Der Combiner 35 dient der Verkopplung der Teil-Koppelstrukturen 24 und 25 bzw. 84 und 85 der Fig. 2 und 3. Der Combiner 35 koppelt hierbei die Teil-Strukturen mittels Kondensatoren oder Spulen auf einen Koppelpunkt 36.

Weiter weist die Teilstruktur 33 ein oder mehrere Koppelpunkte 37 auf. Der Innenleiter des Antennenkabels wird nun mit dem Koppelpunkt 36 und der Außenleiter des Antennenkabels mit den Koppelpunkten 37 verbunden.

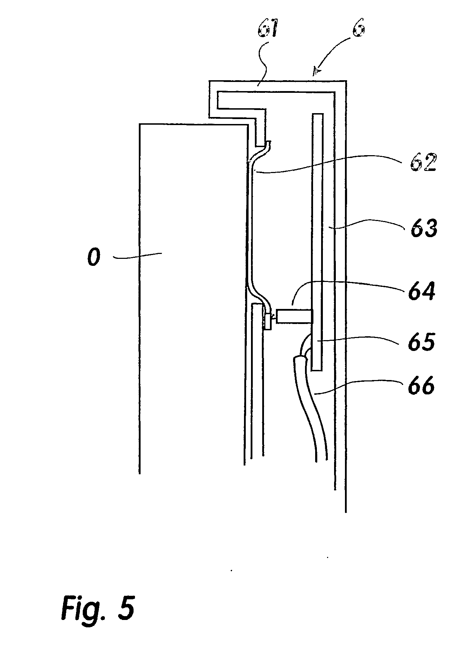

Fig. 5 zeigt eine schematische Darstellung des Mobilfunkendgerätes 0 und eine Halterung 6.

Die Halterung 6 kann ähnlich wie die Halterung 1 nach Fig. 1 ausgestaltet sein. Die Halterung 6 weist ein Gehäuse 61, zwei Teil-Koppelstrukturen 62 und 63, ein elektrisches Verbindungselement 64 und ein Verbindungskabel 66 auf. Das Verbindungskabel 66 ist einerseits mit einer externen Antenne, vorzugsweise einer Fahrzeugantenne, verbunden. Andererseits ist das Verbindungskabel 66 mit einer Schnittstelle 65 der Teil-Koppelstruktur 63 verbunden. Die Teil-Koppelstrukturen 62 und63 sowie das elektrische Verbindungselement 64 bilden einen Antennenkoppler für das Mobilfunkendgerät 0, der über die Schnittschelle 65 zum Anschluß einer externen Antenne verfügt.

Im Bereich der Antenne des Mobilfunkendgerätes 0 ist im Gehäuse 61 eine Ausnehmung vorgesehen, durch die die Teil-Koppelstruktur 62 geführt ist. Die Teil-Koppelstruktur 62 wird von einem dünnen, elastischen Trägersubstrat gebildet, auf das eine dünne Schicht aus leitfähigem Material zur Ausformung der Teil-Koppelstruktur aufgebracht ist.

Bei dem elastischen Trägermaterial 62 handelt es sich beispielsweise um FR4 in einer Dicke von 0,5 mm . Als elektrisch leitfähiges Material findet beispielsweise Kupfer oder Aluminium Verwendung. Die Form der leitfähigen Bahnen der Teil-Koppelstruktur 62 kann der nach den Fig. 2 und Fig. 3 entsprechen. Die Teil-Koppetstruktur 63 kann weiter wie die Teil-Koppelstruktur 3 nach Fig. 4 ausgestaltet sein.

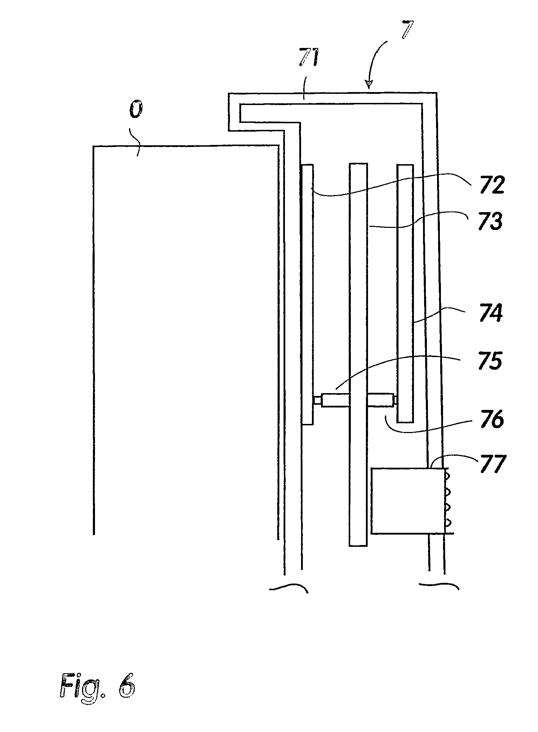

Fig. 6 verdeutlicht ein weiteres Ausführungsbeispiel der Erfindung. Fig. 6 zeigt eine schematische Darstellung des Mobilfunkendgeräts 0 und einer Halterung 7. Die Halterung 7 hat die in dem Ausführungsbeispiel nach Fig. 1 dargestellten Funktionen und mechanischen Ausgestaltungen. Weiter weist die Halterung 7 ein Gehäuse 71, drei Teil-Koppelstrukturen 72, 73 und 74 und drei elektrische Verbindungselemente 75, 76 und 77 auf.

Die Teil-Koppelstruktur 72 kann beispielsweise wie die Teil-Koppelstruktur 3 nach Fig. 2, die Teil-Koppelstruktur 73 wie die Teil-Koppelstruktur 8 nach Fig. 3 und die Teil-Koppelstruktur 74 wie die Teil-Koppelstruktur 3 nach Fig. 4 ausgestaltet sein, mit dem Unterschied, daß der Combiner 35 und die Koppelpunkte 36 und 37 zum Anschluß der externen Antenne auf dem Dielektrizitäts-Körper der Koppelstruktur 73 angeordnet sind.

Weiter ist es auch möglich, daß die Koppelstrukturen 72 und 73 jeweils nur eine Teil-Struktur, beispielsweise eine der Teilstrukturen nach den Fig. 2 oder 3 aufweisen.

Die elektrischen Verbindungselemente 75 und 76 sind wie das elektrische Verbindungselement 4 nach Fig. 1 ausgeformt. Die elektrischen Verbindungselemente 75 und 76 sind hierbei vorzugsweise mit leitfähigen Bereichen der Koppelstruktur 73 verlötet und greifen auf entsprechend ausgeformte Kontaktflächen der Koppelstrukturen 72 und 74 mit federnd gelagerten Kontaktstiften ein. Die Koppelstruktur 72 ist auf der Innenseite des Gehäuses 71 in unmittelbarer Nähe der Antenne des Mobilfunkgeräts 0 angeordnet und mit der Gehäuseinnenseite verklebt. Die Koppelstruktur 72 besteht hierbei vorzugsweise aus einem Folienelement, in das eine entsprechend ausgeformte elektrisch leitfähige Struktur eingebracht ist und das über eine Klebefläche zur Verbindung mit der Innenseite des Gehäuses 72 verfügt.

Das elektrische Verbindungselement 77 besteht aus einem Steckerelement mit mehreren, in einem gemeinsamen Körper aus einem nicht leitenden Material geführten, gefedert gelagerten Kontaktstiften. Neben dem Anschluß der externen Antenne dient das elektrische Verbindungselement 77 auch dem Anschluß von NF-Signalen und der Stromversorgung.

## Patentansprüche

1. Halterung (1, 6, 7) für ein Mobilfunkendgerät (0), wobei die Halterung (1, 6, 7) mit einer Schnittstelle (50, 77) zum Anschluß einer externen Antenne (52), insbesondere einer Kraftfahrzeug-Antenne, und mit einer Koppelstruktur zur elektromagnetischen Kopplung von HF-Signalen zwischen der Halterung (1, 6, 7) und der Antenne (52) eines sich in der Halterung befindlichen Mobilfunkendgeräts (0) versehen ist und die Koppelstruktur derart in der Halterung (1, 6, 7) angeordnet ist, daß bei eingelegtem Mobilfunkendgerät (0) die Koppelstruktur unterhalb des Mobilfunkendgeräts in der Nähe des Mobilfunkgeräts (0) positioniert ist.
wobei die Koppelstruktur als zwei- oder mehrlagige Koppelstruktur mit zwei oder mehr in wesentlich parallel zueinander liegenden Ebenen übereinander angeordneten Teil-Koppelstrukturen (2, 3; 62, 63; 72, 73, 74) ausgeformt ist, wobei die zwei oder mehr Teil-Koppelstrukturen (2, 3; 62, 63; 72, 73, 74) drei bis sechs Millimeter voneinander beabstandet übereinander angeordnet sind, und daß eine erste Teit-Koppetstruhtur (2; 8) aus zwei oder mehr für unterschiedliche Wellenlängenbereiche bestimmte, unterschiedlich ausgeformte Teil-Strukturen (22, 23, 82, 83) besteht.

2. Halterung nach Anspruch 1,
**dadurch gekennzeichnet,**
**daß** die erste Teil-Koppelstruktur (2; 8) zwei Teil-Strukturen (22, 23; 82, 83) aufweist, deren Orienfierungseichtungen um 90° verdreht sind.

3. Halterung nach einem der Ansprüche 1 bis 2,
**dadurch gekennzeichnet,**
**daß** eine zweite Teil-Koppeishuktur (3) aus zwei oder mehr unterschiedlich ausgeformten und miteinander verkoppelten Teil-Strukturen (31, 321, 322, 323, 324) besteht.

4. Halterung nach einem der vorgehenden Ansprüche,
**dadurch gekennzeichnet,**
**daß** eine Teil-Koppelstruktur (2, 3; 62, 63: 72, 73, 74) jeweils aus einem leitfähigen Material besteht, das auf einer Seite eines Trägersubstrats (21, 81), Insbesondere einer Platine, aufgebracht Ist

5. Halterung nach Anspruch 4,
**dadurch gekennzeichnet,**
**daß** auf dem Trägersubstrat (39) zwei oder mehr Teil-Strukturen (31, 321, 322, 323, 324) aus einem leitfähigen Material aufgebracht sind, die zur Abstimmung miteinander, insbesondere mittels Kondensatoren oder Spulen, verbindbar sind.

6. Halterung nach einem der vorgehenden Ansprüche,
**dadurch gekennzeichnet,**
**daß** die zwei oder mehr Teil-Koppelstrukturen (2, 3; 62, 63; 72, 73, 74) jeweils aus einem leitfähigen Material bestehen, das auf einem jeweilligen zugeordneten dünnen dielektrischen Trägersubstrat-Körper (21, 39, 81) aufgebracht ist, und die dielektrischen Trägersubstrat-Körper voneinander beabstandet übereinander angeordnet sind.

7. Halterung nach Anspruch 6,
**dadurch gekennzeichnet,**
**daß** die Halterung ein oder mehrere elektrische Verbindungselemente (4, 84, 75, 76) aufweist, die zwischen Trägersubstrat-Körpern angeordnet sind.

8. Halterung nach Anspruch 7,
**dadurch gekennzeichnet,**
**daß** ein elektrisches Verbindungselement ein oder mehrere gefedert gelagerte elektrisch leitfähige Kontaktelemente aufweist, die auf entsprechend ausgeformten Kontaktflächen eingreifen.

9. Halterung nach einem der Ansprüche 6 bis 8,
**dadurch gekennzeichnet,**
**daß** auf einem ersten Trägersubstrat-Körper (39) ein HF-Kopplungselement (35) zur Kopplung zweier oder mehrerer Teil-Strukturen (22, 23; 82, 85) angeordnet ist, die auf einem zweiten Trägersubstrat-Körper (21; 91) aufgebracht sind.

10. Halterung nach einem der Ansprüche 6 bis 9,
**dadurch gekennzeichnet,**
**daß** der Trägersubstrat-Körper aus einem flexiblen Material besteht.

11. Halterung nach einem der Ansprüche 6 bis 10,
**dadurch gekennzeichnet,**
**daß** der Trägersubstrat-Körper (39) ein oder mehrere Innenfräsungen (341, 342. 343) aufweist, die zwischen den Leiterflächen der Teil-Koppelstrukturen (31, 321, 322, 323, 324) angeordnet sind.

12. Halterung nach einem der vorgehenden Ansprüche,
**dadurch gekennzeichnet,**
**daß** die Koppelstruktur derart in der Halterung (1, 6, 7) angeordnet ist, daß bei eingelegtem Mobilfunkgerät (0) die Koppelstruktur in unmittelbarer Nähe der Antenne des Mobilfunkgeräts positioniert ist.

13. Halterung nach einem der vorgehenden Ansprüche,
**dadurch gekennzeichnet,**
**daß** eine Teil-Koppelstruktur (72) mit dem Gehäuse (71) der Halterung (7) verbunden, insbesondere verklebt, ist.

14. Halterung nach einem der vorgehenden Ansprüche,
**dadurch gekennzeichnet,**
**daß** eine Teil-Koppelstruktur (72) auf der Innenseite des Gehäuses (71) der Halterung (7) in unmittelbarer Nähe der Antenne des Mobilfunkgeräts (0) angeordnet ist.

15. Halterung nach einem der einem der vorgehenden Ansprüche,
**dadurch gekennzeichnet,**
**daß** die parallelen Ebenen senkrecht zur Hauptabstrahlrichtung des Mobilfunkendgerätes ausgerichtet sind.

## Claims

1. A holder (1, 6, 7) for a mobile wireless terminal (0), the holder (1, 6, 7) being provided with an interface (50, 77) for connection to an external antenna (52), particularly a motor vehicle antenna, and having a coupling structure for electromagnetic coupling of HF signals between the holder (1, 6, 7) and the antenna (52) of a mobile wireless terminal (0) located in the holder, and the coupling structure being situated in the holder (1, 6, 7) in such a way that when the mobile wireless terminal (0) is inserted, the coupling structure is positioned below the mobile wireless terminal in proximity to the mobile wireless terminal (0),
the coupling structure being shaped as a two-layered or multilayered coupling structure having two or more partial coupling structures (2, 3; 62, 63; 72, 73, 74) situated one atop another in planes lying essentially parallel to one another, the two or more partial coupling structures (2, 3; 62, 63; 72, 73, 74) being situated one atop another at a distance of 3 to 6 mm from one another, and a first partial coupling structure (2; 8) comprising two or more differently shaped partial structures (22, 23; 82, 83) which are intended for different wavelength ranges.

2. The holder according to claim 1,
**characterized in that** the first partial coupling structure (2; 8) has two partial structures (22, 23; 82, 83), whose orientation directions are rotated by 90°.

3. The holder according to one of claims 1 through 2,
**characterized in that** a second partial coupling structure (3) comprises two or more differently shaped partial structures (31, 321, 322, 323, 324) which are coupled to one another.

4. The holder according to one of the preceding claims,
**characterized in that** each partial coupling structure (2, 3; 62, 63; 72, 73, 74) comprises a conductive material which is applied to one side of a carrier substrate (21, 81), particularly a circuit board.

5. The holder according to claim 4,
**characterized in that** two or more partial structures (31, 321, 322, 323, 324) made of a conductive material are applied to the carrier substrate (39), which are connectable to one another for tuning, particularly using capacitors or coils.

6. The holder according to one of the preceding claims,
**characterized in that** the two or more partial coupling structures (2, 3; 62, 63; 72, 73, 74) each comprise a conductive material which is applied to a particular assigned thin dielectric carrier substrate body (21, 39, 81), and the dielectric carrier substrate bodies are situated one atop another and at a distance from one another.

7. The holder according to claim 6,
**characterized in that** the holder has one or more electrical connection elements (4, 64, 75, 76), which are situated between carrier substrate bodies.

8. The holder according to claim 7,
**characterized in that** an electrical connection element has one or more spring-loaded electrically conductive contact elements which engage on correspondingly shaped contact surfaces.

9. The holder according to one of claims 6 through 8,
**characterized in that** an HF coupling element (35), for coupling two or more partial structures (22, 23; 82, 85), which are applied to a second carrier substrate body (21; 91), is situated on a first carrier substrate body (39).

10. The holder according to one of claims 6 through 9,
**characterized in that** the carrier substrate body comprises a flexible material.

11. The holder according to one of claims 6 through 10,
**characterized in that** the carrier substrate body (39) has one or more internal cuts (341, 342, 343), which are situated between the conducting surfaces of the partial coupling structures (31, 321, 322, 323, 324).

12. The holder according to one of the preceding claims,
**characterized in that** the coupling structure is situated in the holder (1, 6, 7) in such a way that when the mobile wireless terminal (0) is inserted, the coupling structure is positioned in direct proximity to the antenna of the mobile wireless terminal.

13. The holder according to one of the preceding claims,
**characterized in that** one partial coupling structure (72) is connected, particularly glued, to the housing (71) of the holder (7).

14. The holder according to one of the preceding claims,
**characterized in that** one partial coupling structure (72) is situated on the interior of the housing (71) of the holder (7) in direct proximity to the antenna of the mobile wireless terminal (0).

15. The holder according to one of the preceding claims,
**characterized in that** the parallel planes are oriented perpendicularly to the main emission direction of the mobile wireless terminal.

## Revendications

1. Fixation (1, 6, 7) pour un terminal radioélectrique mobile (0), la fixation (1, 6, 7) étant munie d'une interface (50, 77) pour la connexion d'une antenne externe (52), notamment d'une antenne d'un véhicule automobile, et avec une structure de couplage pour le couplage électromagnétique de signaux HF entre la fixation (1, 6, 7) et l'antenne (52) d'un terminal radioélectrique mobile (0) situé dans la fixation, et la structure de couplage étant disposée dans la fixation (1, 6, 7) de façon à ce que lorsque le terminal radioélectrique mobile (0) est inséré, la structure de couplage soit positionnée sous le terminal radioélectrique mobile, à proximité de l'appareil radioélectrique mobile (0),
la structure de couplage étant conçue en tant que structure de couplage à deux ou à plusieurs couches avec deux ou plusieurs structures de couplage partielles (2, 3 ; 62, 63 ; 72, 73, 74) superposées, situées dans des plans sensiblement parallèles l'un de l'autre, les deux ou plusieurs structures de couplage partielles (2, 3 ; 62, 63 ; 72, 73, 74) étant superposées à une distance mutuelle de trois à six millimètres et une première structure de couplage partielle (2 ; 8) étant constituée en deux ou plusieurs structures partielles de conceptions différentes (22, 23 ; 82, 83), destinées à deux ou à plusieurs gammes de longueurs d'ondes différentes.

2. Fixation selon la revendication 1,
**caractérisée en ce que** la première structure de couplage partielle (2 ; 8) comporte deux structures partielles (22, 23 ; 82, 83) dont les sens d'orientation sont tournés à 90 °C.

3. Fixation selon l'une quelconque des revendications 1 et 2,
**caractérisée en ce qu'**une deuxième structure de couplage partielle (3) est constituée de deux ou de plusieurs structures partielles (31, 321, 322, 323, 324) de conceptions différentes et couplées entre elles.

4. Fixation selon l'une quelconque des revendications précédentes,
**caractérisée en ce qu'**une structure de couplage partielle (2, 3 ; 62, 63 ; 72, 73, 74) est respectivement en une matière conductrice, qui est appliquée sur une face d'un substrat porteur (21, 81), notamment d'une platine.

5. Fixation selon la revendication 4,
**caractérisé en ce que** deux structures partielles ou plus (31, 321, 322, 323, 324) en une matière conductrice, qui peuvent être reliées l'une avec l'autre pour une mise au point mutuelle, notamment au moyen de condensateurs ou de bobines sont appliquées sur le substrat porteur (39).

6. Fixation selon l'une quelconque des revendications précédentes,
**caractérisée en ce que** les deux structures de couplage partielles ou plus (2, 3 ; 62, 63 ; 72, 73, 74) sont chacune en une matière conductrice, qui est appliquée sur un corps diélectrique mince de substrat porteur (21, 39, 81) respectivement associé et **en ce que** les corps diélectriques de substrat porteur sont superposés à une distance mutuelle.

7. Fixation selon la revendication 6,
**caractérisée en ce que** la fixation comporte un ou plusieurs éléments de liaison électriques (4, 64, 75, 76) qui sont disposés entre des corps de substrats porteur.

8. Fixation selon la revendication 7,
**caractérisée en ce qu'**un élément de liaison électrique comporte un ou plusieurs éléments de contact conducteur(s) d'électricité, logé(s) sur ressort, qui s'engage(nt) sur des surfaces de contact conçues en conséquence.

9. Fixation selon l'une quelconque des revendications 6 à 8,
**caractérisée en ce qu'**un élément de couplage HF (35) pour le couplage de deux ou de plusieurs structures partielles (22, 23 ; 82, 85) qui sont appliquées sur un deuxième corps de substrat porteur (21 ; 91) est disposé sur un premier corps de substrat porteur (39).

10. Fixation selon l'une quelconque des revendications 6 à 9,
**caractérisée en ce que** le corps de substrat porteur est en une matière flexible.

11. Fixation selon l'une quelconque des revendications 6 à 10,
**caractérisée en ce que** le corps de substrat porteur (39) comporte un ou plusieurs fraisages internes (341, 342, 343) qui sont disposés entre les surfaces de conducteurs des structures de couplage partielles (31, 321 322, 323, 324).

12. Fixation selon l'une quelconque des revendications précédentes,
**caractérisée en ce que** la structure de couplage est disposée dans la fixation (1, 6, 7) de façon telle, que lorsque l'appareil radioélectrique mobile (0) est inséré, la structure de couplage soit positionnée à proximité directe de l'antenne de l'appareil radioélectrique mobile.

13. Fixation selon l'une quelconque des revendications précédentes,
**caractérisée en ce qu'**une structure de couplage partielle (72) est reliée, notamment collée sur le boîtier (71) de la fixation (7).

14. Fixation selon l'une quelconque des revendications précédentes,
**caractérisée en ce qu'**une structure de couplage partielle (72) est disposée sur la face interne du boîtier (71) de la fixation (7), à proximité directe de l'antenne de l'appareil radioélectrique mobile (0).

15. Fixation selon l'une quelconque des revendications précédentes, **caractérisée en ce que** les plans parallèles sont orientés à la perpendiculaire du sens de rayonnement principal du terminal radioélectrique mobile.
